# EUROPEAN PATENT SPECIFICATION

(11) **EP 0 553 364 B1**
(45) Date of publication and mention of the grant of the patent: **03.04.1996**
(21) Application number: 92101170.6
(22) Date of filing: 24.01.1992
(51) Int. Cl.: F02M 43/00, F02M 43/04

(54) **Water injection diesel engine**
Dieselmotor mit Wassereinspritzung
Moteur Diesel à injection d'eau

(43) Date of publication of application: 04.08.1993
(73) Proprietor: MITSUBISHI JUKOGYO KABUSHIKI KAISHA, Tokyo (JP)
(72) Inventor: Tosa, Youzou, Nagasaki Tech. Inst. of Mitsubishi, Nagasaki-shi, Nagasaki-ken (JP); Nagae, Yoshinori, Nagasaki Tech. Inst. Mitsubishi, Nagasaki-shi, Nagasaki-ken (JP)
(74) Representative: Henkel, Feiler, Hänzel & Partner

(56) References cited:
- EP-A- 0 104 368
- EP-A- 0 459 083
- US-A- 4 273 087

## Description

### BACKGROUND OF THE INVENTION:

### Field of the Invention

The present invention relates to a water injection Diesel engine.

### Description of the Prior Art

As means for reducing nitrogen oxides (NOₓ) in the exhaust gas of a Diesel engine and reducing the exhaust black smoke and fuel consumption rate of the engine at the same time, there effectively exists a conventional Diesel engine of the type capable of injecting fuel and water from a shared fuel injection valve, as shown in Figs. 10 and 12. This diesel engine is disclosed in EP-A-0 459 083.

In these Figures, reference numeral 1 designates a fuel tank, numeral 2 a fuel feed pump, numeral 3 a fuel injection pump body, numeral 4 a fuel injection plunger, numeral 5 a plunger barrel, numeral 6 a discharge valve, numeral 7 a check regulator valve disposed in a side passage of the discharge valve 6, numeral 8 a fuel injection tube, numeral 40 a fuel/water injection valve, numeral 9 the body of the injection valve 40, numeral 10 an injection port, numeral 11 a needle valve, numeral 12 a fuel reservoir, and numeral 14 a bias spring of the needle valve 11.

On the other hand, numeral 19 designates a water tank, numeral 18 a water feed pump, numeral 17 a water feed tube, numeral 16 a water feed control valve, numeral 15 a water feed tube, and numeral 13 a water feed check valve for checking the backward flow of water to the control valve. Moreover, numeral 20 designates a control unit for controlling the amount of water to be fed and the feed timing. The control unit responds to a crank angle signal or other operating conditions of the engine to output a control signal to the control valve 16 via a line 23.

The body 9 of the fuel/water injection valve 40 is formed with a fuel passage 22 for establishing communication between the fuel injection tube 8 and the fuel/water injection valve fuel reservoir 12. On the other hand, the water feed check valve 13 is connected with a confluence 31 midway of the upper fuel passage 22 through a water passage 30 which is also formed in the body of the fuel/water injection valve 40.

Next, the operation of this system will be described in the following.

The water pumped out of the water tank 19 by the water feed pump 18 is fed via the feed tube 17 to the control valve 16. For a quiescent period in which the plunger of the fuel injection pump 3 does not pump out the fuel, the control valve 16 is held in a open state for a predetermined period through the control unit to feed a predetermined amount of water to the fuel/water injection valve 40 via the feed tube 15. At this time, if the opening pressure of the check regulator valve 7 of the fuel injection pump 3 is designated at P_{R} whereas the opening pressure of the water feed check valve 13 is designated at P_{P}, the following relations hold for the opening pressure P_{O} of the needle valve 11:
P_{O} > P_{R}; and P_{O} > P_{P}.
Thus, the water fed flows into the fuel passage 22 via the check valve 13, the water passage 30 and the confluence 31.

The fuel residing in the fuel passage 22 upstream of the confluence 31, i.e., at the side of the fuel injection pump 3 is forced back toward the fuel injection pump 3 via the injection tube 8 by the fed water pressure so that it opens the check regulator valve 7 and flows into the plunger chamber.

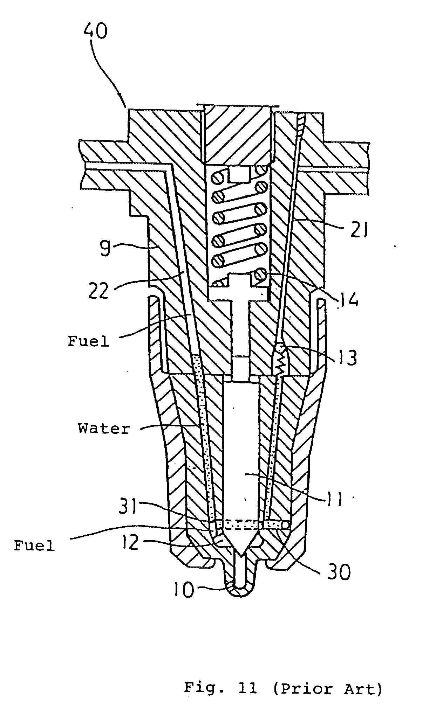

As a result, as shown, the fuel/water injection valve 40 is filled up with the fuel up to the capacity of V₁ and V₂, i.e., the sum of the capacity V₂ of the fuel reservoir 12 and the capacity V₁ of the fuel passage 22 from the confluence 31 to the fuel reservoir 12. The fuel passage 22 up upstream of the confluence 31 is filled up with a predetermined amount of water and further upstream with the fuel as shown in Fig. 11.

When the plunger 4 of the fuel injection pump 3 rises to start compression of the fuel, the pressure in the injection tube 8, the fuel passage 22 and the fuel reservoir 12 rises, and when it becomes equal to or exceeds the opening pressure P_{O} of the needle valve 11 the needle valve 11 is opened. At this time, the water in the water passage 30 is not returned to the water tank 19 by the action of the check valve 13.

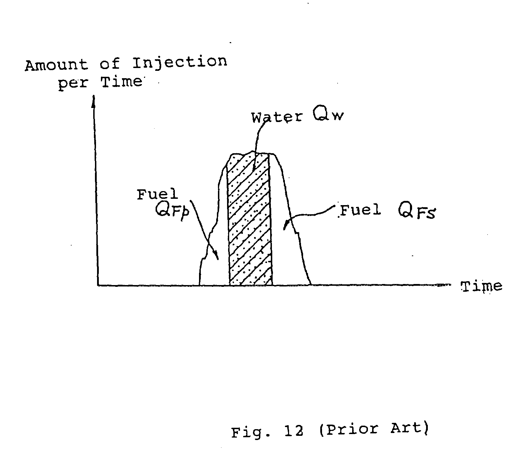

When the needle valve 11 reaches its opening pressure P_{O}, the injection port 10 of the fuel/water injection valve 40 of Fig. 12 injects: the fuel in an amount of the capacity of V₁ + V₂, which has filled up the capacity of the fuel reservoir 12 and the fuel passage 22 up to the confluence; then the water, which has been fed to a predetermined amount; and finally the remaining fuel to the last. If the amount of fuel to be injected by a single action is designated at Q_{F}, the amount Q_{FP} of fuel to be injected at first is expressed by Q_{FP} = V₁ + V₂, as has been described hereinbefore. The total amount Q_{W} of water is then injected, and the remaining amount of fuel Q_{FS} is finally injected in an amount, as expressed by Q_{FS} = Q_{F} - Q_{FP}.

As a result, the ignition at an initial stage of the fuel stroke of the Diesel engine is ensured with the fuel in the amount Q_{FP}. Subsequently, the suction of air into the sprayed atmosphere is increased by the water in the amount Q_{W} so that the burning rate is raised to reduce production of black smoke. At the same time, the water is introduced into the flame zone to reduce the NOₓ.

According to the prior art, the reducing effect of NOₓ in. the exhaust gas is substantially proportional to the amount Q_{W} of injected water. If, however, the water amount Q_{W} is excessively increased relative to the fuel amount Q_{F}, the time interval between the primary and secondary fuel injection amounts Q_{FP} and Q_{FS} is so elongated to deteriorate the combustion so that a stable engine operation cannot be achieved. In order to further reduce the NOₓ, therefore, there is required means for increasing the water injection amount Q_{W} without any insufficiency of the combustion.

### SUMMARY OF THE INVENTION:

An object of the present invention is to provide a water injection Diesel engine which is free from any instability in combustion, even if the amount of injected water is considerably increased. According to the invention thus object is solved by providing a water injection Diesel engine as defined in claim 1 or 2.

In a water injection Diesel engine equipped with a confluence 31 for a fuel passage 22 of a fuel injection valve and a water feed passage for feeding water into the fuel passage via a solenoid valve and a check valve so that fuel and water may be injected from the shared fuel injection valve, a first invention is characterized by comprising water/fuel feeders and a fuel/water change-over valve unit for feeding pressurized water and fuel independently of each other so that the water and the fuel may flow alternately from an feed controlling solenoid control valve for a water feed time period. On the contrary, another invention is different from the first invention in a mechanism for forming a multi-layered liquid of the fuel and water to be fed during the water feed period. Specifically, in addition to the fuel passage of the fuel injection valve, the water feed passage for feeding water into the fuel passage via a control valve and a check valve and the confluence 31 for said fuel passage and said feed passage, the another invention comprises a confluence 131 for the fuel passage of the fuel injection valve and a fuel feed passage 130 for feeding the fuel at the closer side to a needle valve of the fuel injection valve than the aforementioned confluence for feeding water in the fuel passage of the fuel injection valve via an independent control valve 116 and a check valve 113, whereby the water feed solenoid valve and the fuel feed control valve are so alternately controlled through a control unit 20 during a quiescent period from the end of injection by the fuel injection valve to a subsequent injection that the fuel and water may be injected in a multi-layered state.

When the feed controlling control valve 16 is opened during the quiescent time period of the fuel injection valve, the pressurized water and fuel are alternately caused in the first invention to flow into the feed passage through the solenoid control valve 16 by a water/fuel change-over valve unit 201.

As a result, multi-layered liquid columns of water - liquid - water - fuel - - - are formed in the feed passage. These multi-layered water/fuel liquid columns flow into via the confluence 31 formed in the fuel valve while the feed controlling current control valve 16 is opened, so that the fuel in the fuel passage upstream of the confluence, i.e., at the side of the fuel injection pump fills up the fuel passage while forcibly opening and returning the check regulator valve which is disposed in the fuel injection pump. Since, at this time, the multi-layered liquid columns alternately of the water and fuel formed in the feed passage fill while holding their multi-layered structure, so that similar water/fuel multi-layered liquid columns are maintained in the fuel passage 22, too. When the fuel injection pump is operated, the liquid columns are injected from the injection port through the needle valve of the fuel valve while maintaining their multi-layered structure.

Thus, even if the water injection amount Q_{W} is increased far more than that of the prior art, the burning instability can be avoided because the water/fuel multi-layered columns are injected during the water injection.

As a result, the water injection amount can be increased without inviting any operational instability of the engine to achieve an effect for reducing the NOₓ in the exhaust gas according to the increase in the water injection amount.

Next, the operation of the system for preparing the water/fuel multi-layered liquid to be injected during the water injection according to the feature of the other invention will be described in the following. When the control valve 16 is opened through the controller unit 20 during the quiescent time of the fuel injection pump, the water is fed into the water feed passage 15 from the water pump 19 through the water pump 18 and the control valve 16, and the water flows from the water feed confluence 31 in the fuel passage to fill up the fuel passage 22 with the fuel in the fuel passage upstream of the confluence 31 while forcibly opening the check regulator valve 7, which is disposed in the fuel injection pump, and forcing the fuel toward the fuel injection pump. Next, when the water feed control valve 16 is closed and the fuel feed control valve 116 is opened, the fuel flows from the confluence 131, which is formed downstream of the confluence for water feed 31, i.e., at the side of the injection valve needle valve, to force the water and fuel, which were previously fed into the fuel passage, simultaneously toward the fuel injection pump until it fills up the fuel passage 22. Subsequently, the fuel feed control valve 116 is closed, and the water feed control valve 16 is opened to repeat the aforementioned procedures several times. As a result, the alternately multi-layered liquid columns of fuel - water - fuel - water - - - are formed in the first fuel passage to give an effect similar to that of the first invention.

### BRIEF DESCRIPTION OF THE DRAWINGS:

In Figs. 1 to 6 showing a first embodiment:
Fig. 1 is a diagram showing the structure of a water injection system;
Fig. 2 is a longitudinal section showing a water/fuel change-over valve;
Fig. 3 is a section taken along line III - III of Fig. 2;
Fig. 4 shows a modification of the same change-over valve; and
Figs. 5 and 6 are diagrams for explaining the operations of the embodiment.

In Figs. 7 to 9 showing a second embodiment:

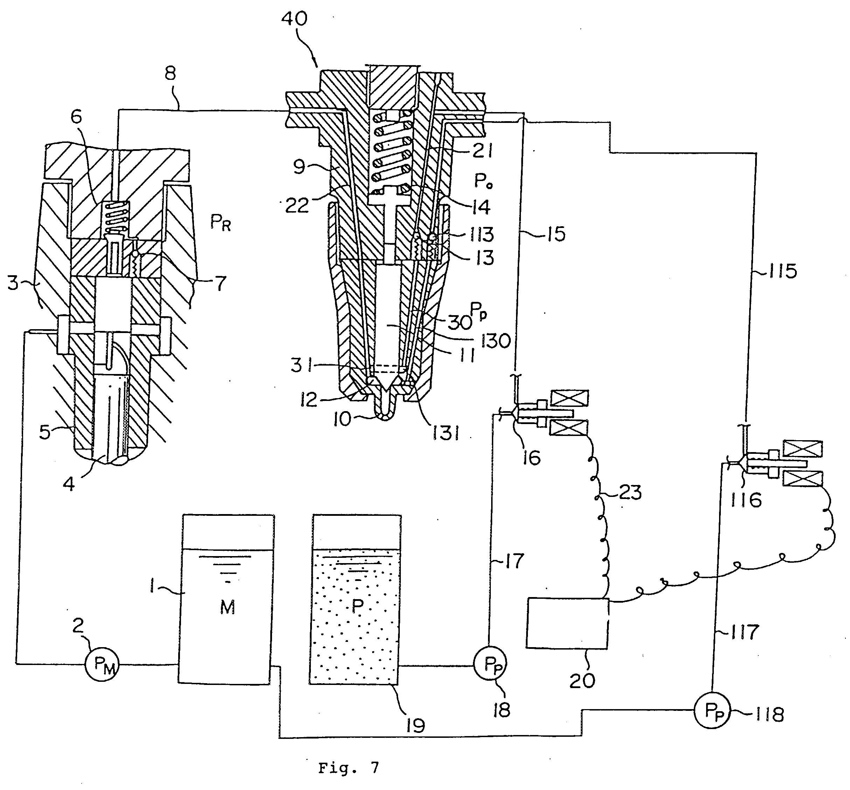

Fig. 7 is a diagram showing the structure of a water injection system; and

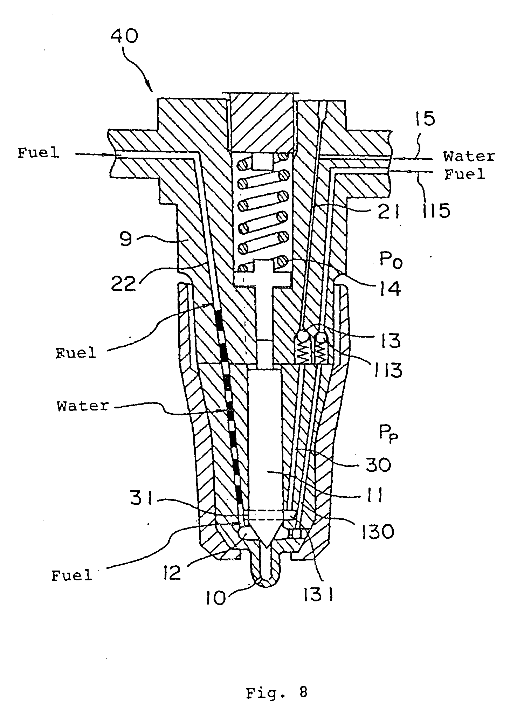

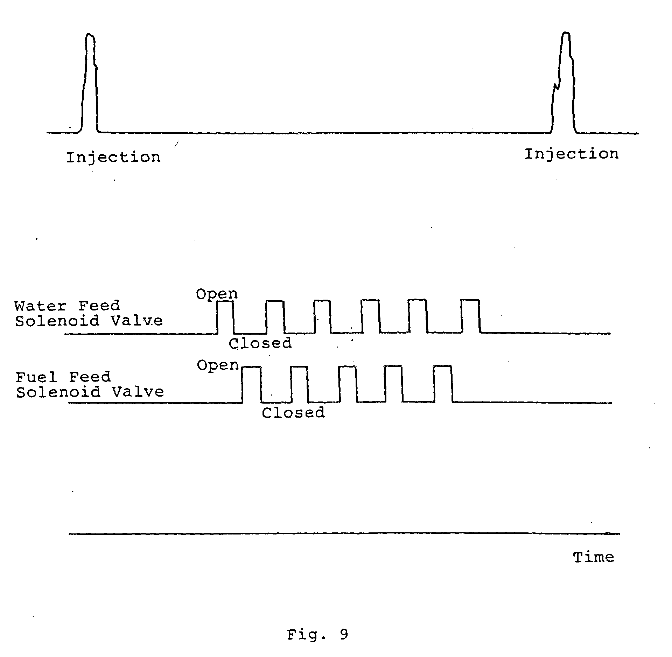

Figs. 8 and 9 are diagrams for explaining the operations of the embodiment.

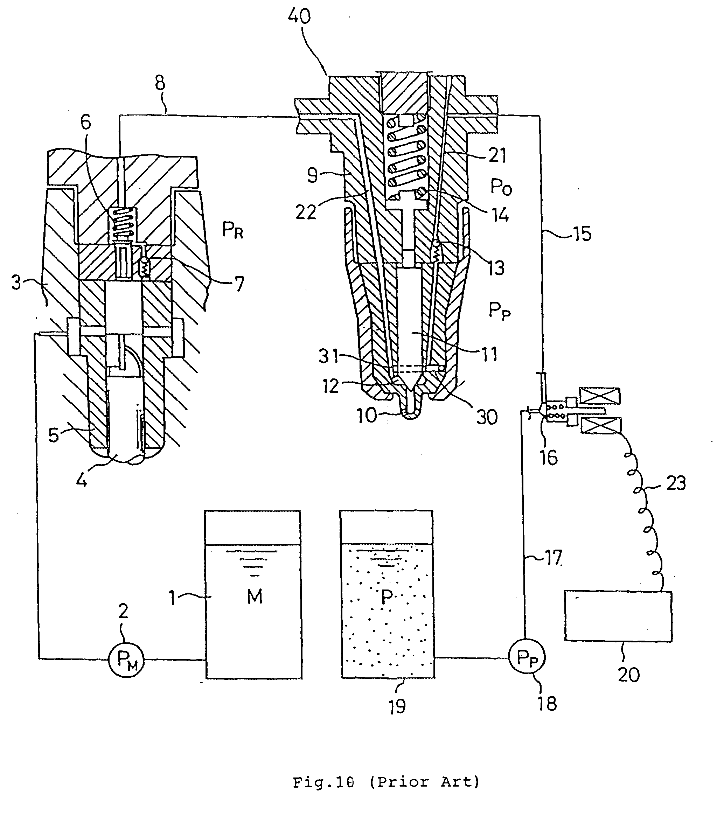

In Figs. 10 to 12 showing an example of the prior art:

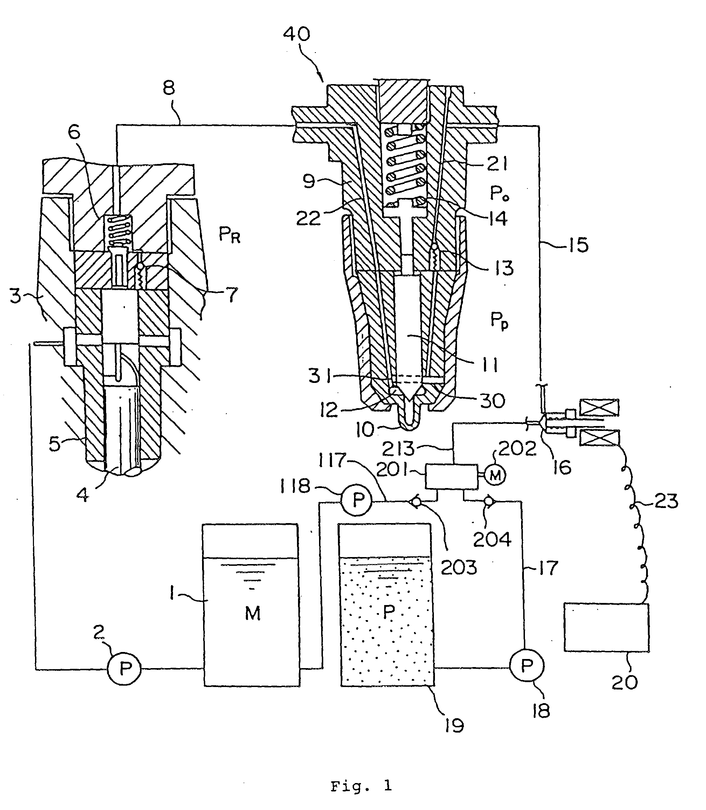

Fig. 10 is a diagram corresponding to Fig. 1;
Fig. 11 is a diagram corresponding to Fig. 6; and
Fig. 12 is a diagram for explaining the operations.

### DESCRIPTION OF THE PREFERRED EMBODIMENTS:

Embodiments of the present invention will be described in the following with reference to Figs. 1 to 9.

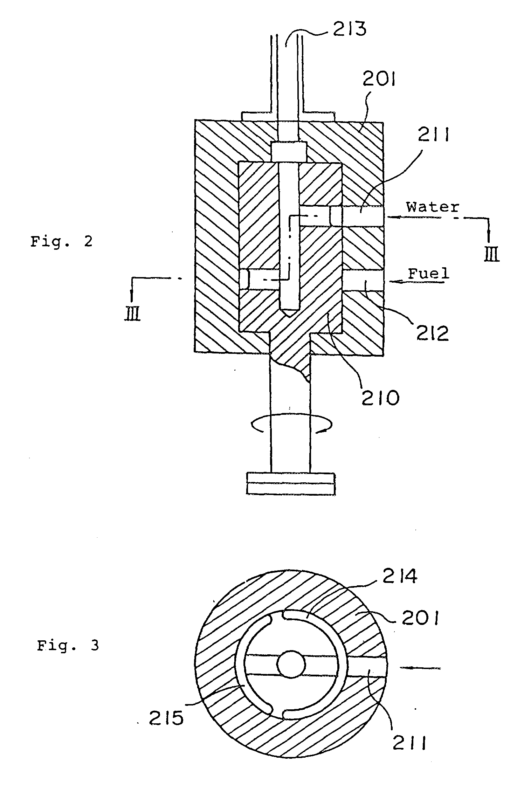

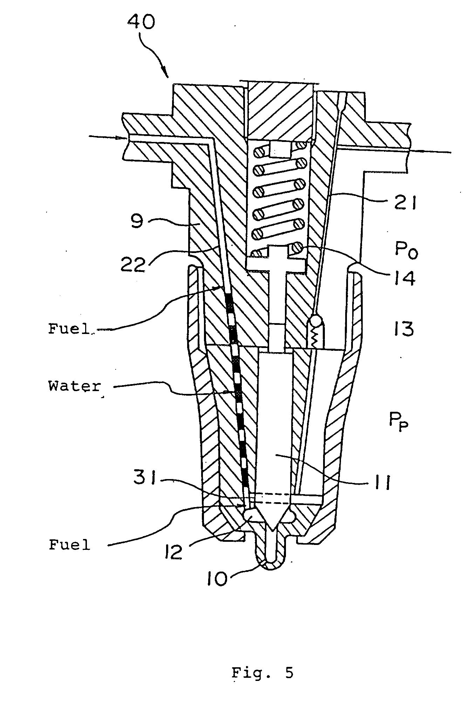

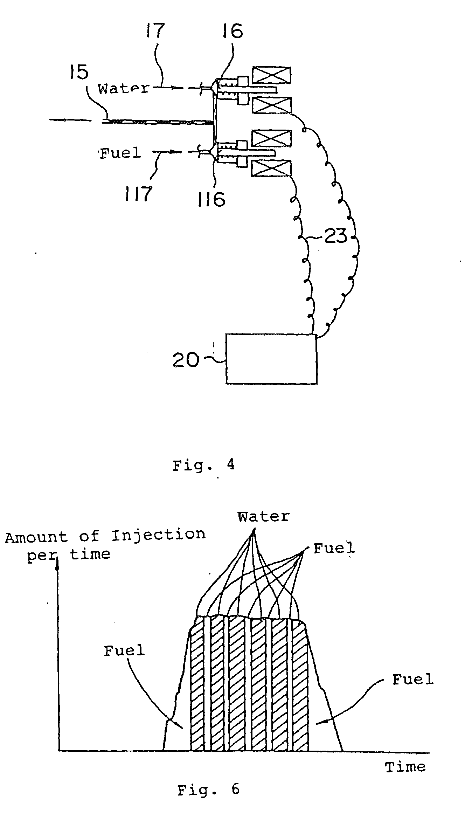

In Figs. 1 to 6 showing a first embodiment: Fig. 1 is a diagram showing the structure of a water injection system; Fig. 2 is a longitudinal section showing a change-over valve; Fig. 3 is a section taken along line III - III of Fig. 2; Fig. 4 shows a modification of the change-over valve; and Figs. 5 and 6 are diagrams for explaining the operations.

The reference numerals 1 to 31 designate the same parts as those (of Fig. 10) of the example of the prior art.

Numeral 118 designates a fuel pressurizing pump for sucking and pressurizing a fuel from the fuel tank 1 and introducing it via a fuel feed tube 117 into a change-over valve unit 201. On the other hand, the water having been pressurized by a water feed pump 18 is also introduced via a water feed tube 17 into the change-over valve unit 201. Between the fuel feed tube 117 and the water feed tube 17 and the change-over valve unit 201, respectively, there are arranged check valves 203 and 204 for allowing flows exclusively from the fuel tank 1 and the water tank 19 to the change-over valve unit 201. Numeral 202 designates a drive unit for driving the change-over valve unit 201. This drive unit 202 may be either one synchronized with the number of revolution of the engine or one having a constant number of revolution.

Figs. 2 and 3 show the change-over valve unit 201 of rotary type, in which numerals 211 and 212 designate water and fuel feed ports, respectively. This rotary valve is formed with a water groove 214 and a fuel groove 215 for feeding the water and fuel alternately into a feed tube 213.

Fig. 4 shows a second modification of the change-over valve unit in which the control unit 20 and solenoid control valves 16 and 116 are combined. The numeral 16 designates a water control valve, and the numeral 116 designates a fuel control valve, which are disposed in the water feed tube 17 and a fuel feed tube 117, respectively. Thus, the fuel injection pump 3 is alternately opened and closed for a predetermined period during the quiescent period by the control unit 20.

Next, the operations of the first embodiment thus constructed will be described in the following.

In case the change-over valve unit of Figs. 2 and 3 is used, the pressurized water and fuel flow via their respective feed tubes 17 and 117 into the feed tube 15 if the control solenoid valve 16 is opened during the quiescent period of the fuel pump. By the action of the change-over valve 201, the water and fuel are alternately caused to flow while the control ports 211 and 212 are opened.

In the modification of the change-over valve unit of Fig. 4, the water and fuel control valves 16 and 116 are alternately controlled by the control unit 20 for the quiescent period of the fuel injection pump 3 so that the water and fuel alternately flow into the feed tube 15 in a manner to correspond to the respective valve open periods as in case of the first embodiment. As a result, the liquid columns having alternately multi-layered water and fuel are formed in the feed tube 15.

These multi-layered liquid columns flow, while holding their multi-layered structure, during the injection period sequentially into the fuel passage 22 via a feed passage 21, a check valve 13 and a confluence 31, which are formed in the fuel injection valve body 9. The fuel upstream of the confluence 31, i.e., at the side of the fuel injection pump 3 forcibly opens the check regulator valve 7, which is disposed in the fuel injection pump 3, and is returned to fill up the fuel passage 22 with the multi-layered liquid columns. Since, at this time, the alternately water/fuel multi-layered liquid columns formed in the feed passage 21 fill up while holding their multi-layered structure, the multi-layered liquid columns composed alternately of fuel (in white) - water (in black) - fuel - water - - -, as shown in Fig. 5, are formed in the fuel passage 22.

If the fuel injection pump 3 is then operated to start its injection, the needle valve 11 is opened, as shown in Fig. 6, so that the fuel in the fuel reservoir 12 and then the water and fuel in the fuel passage 22 are alternately injected in the multi-layered state until only the fuel is injected. These injections are repeated. As a result, there is no possibility that the revolution of the engine is made unstable even if the amount of water to be injected for reducing the NOₓ in the exhaust gas is increased.

In Figs. 7 to 9 are diagrams showing a second embodiment, Fig. 7 is a diagram showing the structure of a water injection system, and Figs. 8 and 9 are diagrams for explaining the operations.

In these Figures, the reference numerals 1 to 31 designate the same parts as those of the example (as shown in Figs. 10 to 12) of the prior art so that their description will be omitted. Numeral 118 designates a fuel pump for feeding the fuel from the fuel tank 1 via the fuel feed passage 117 to the control valve 116. Numeral 115 designates a fuel feed tube, and numeral 113 designates a fuel feed check valve for controlling the back flow to the fuel control valve 116.

The fuel/water injection valve 40 is equipped in its body 9 with: a fuel passage, which is formed of the fuel feed check valve 113 and a fuel feed passage 130 independently of the water feed check valve 13, the water passage 30 and the water feed confluence 31, and a fuel feed confluence 131 merging into the fuel passage 22. The fuel feed confluence 131 is disposed closer to the fuel reservoir 12 of the fuel valve needle valve 11 than the water feed confluence 31. In the second embodiment of Fig. 7, the fuel reservoir 12 is formed in the confluence 131. The fuel feed control valve 116 has its fuel feed timing and amount controlled by the control unit 20. At the same time, both the water feed control valve 16 and the fuel feed control valve 116 are alternately opened and closed for a predetermined time period during the quiescent period of the fuel injection pump.

Next, the operations of the second embodiment thus constructed will be described in the following.

When the water control valve 16 is opened at first through the control unit 20 during the quiescent period of the fuel injection pump 3, the water to be injected flows, as in the prior art, through the control valve 16 and via the check valve 13 and the water passage 30 from the water feed confluence 31 into the fuel passage 22 and opens the check regulator valve 7 to force the fuel in the fuel passage 22 upstream of the confluence 31, i.e., at the side of the fuel injection pump 3 toward the fuel injection pump until it fills up the fuel passage 22. Next, through the control unit 20, the water feed control valve 16 is closed, and the fuel feed control valve 116 is opened. As a result, the fuel upstream of the fuel injection confluence 131 downstream of the water feed confluence 31, i.e., at the side of the fuel reservoir 12 of the needle valve 11 is caused, by the same action as that for the water feed, to flow and fills up the fuel passage 22 while forcibly returning the water and fuel fed already into the fuel passage 22 toward the fuel injection pump 3. As a result, the water in the fuel passage 22 is returned upstream of the water feed confluence 31 so that the space between the water.and the water feed confluence 31 is filled up with the fuel. Subsequently, through the control unit, the fuel feed control valve 116 is closed whereas the water feed control valve is opened, and the operations similar to the aforementioned ones are repeated several times. The operational situations of the control valves 16 and 116 at this time are illustrated in Fig. 9. As a result, the fuel passage 22 is formed therein with the alternately multi-layered liquid columns of fuel (in white) - water (in black) - fuel - water - - -, as shown in Fig. 8.

If the fuel injection pump 3 is operated to start the injection, the water and fuel in the fuel reservoir 12 and the fuel passage 22 are injected when the needle valve 11 is opened. At this time, the fuel and water are alternately injected in the multi-layered form, as shown in Fig. 6, so that the NOₓ in the exhaust gas is reduced. Thus, the combustion in the engine is not made unstable even if the amount of water injected into the sprayed atmosphere is increased.

According to the present invention, fuel and water are injected in the multi-layered state into a water injection Diesel engine for injecting the fuel and water from a shared fuel injection valve, unlike the prior art in which the water is intermediately injected. Thus, the combustion is not made unstable because the fuel is intermittently injected in the multi-layered state, even if the amount of water injected is considerably increased.

As a result, the amount of water to be injected can be increased without inviting any combustion instability in the engine so that the NOₓ in the exhaust gas can be effectively reduced according to an increase in the amount of injected water.

## Claims

1. A water injection Diesel engine comprising a shared fuel injection valve (40) for injecting fuel and water into an engine cylinder, said fuel injection valve (40) including a confluence (31) for allowing the fuel fed from a fuel injection pump (3) via a first fuel passage (8, 22) and the water fed from a water tank (19) via a water feed passage (15, 17, 21) having a check valve (13) controlled by a control valve (16) to join therein;
characterized by a second fuel passage (117) connecting a fuel tank (1) and the water feed passage (15, 17, 21); and
a change-over valve (201) disposed at a confluence between said water feed passage (15, 17, 21) and said second fuel passage (117) for feeding the fuel and water alternately to said fuel injection valve (40) via said water feed passage (15, 21).

2. A water injection Diesel engine comprising a shared fuel injection valve (40) for injecting fuel and water into an engine cylinder, comprising a water feed passage (15, 17, 21) connecting a water tank (19) and a water passage (30) in said fuel injection valve (40), said water passage (30) having a check valve (13); a first fuel feed passage (8) connecting a fuel pump (3) and a first fuel passage (22) in said fuel injection valve (40); a control valve (16) for opening and closing said water feed passage (15, 17, 21); and a first confluence (31) passage disposed in said fuel injection valve (40) for joining said first fuel passage (22) and the water passage (30);
characterized by a second fuel feed passage (115, 117) connecting a fuel tank (1) and a second fuel passage (130) in said fuel injection valve (40);
a control valve (116) for opening and closing said second fuel feed passage (115, 117) and a second confluence (131) disposed in said fuel injection valve (40) for joining said first fuel passage (22) and the second fuel passage (130) having a check valve (113);
said second confluence (131) being arranged closer to an injection port (10) than said first confluence (31).

## Patentansprüche

1. Dieselmaschine mit Wassereinspitzung, umfassend ein gemeinsames Kraftstoffeinspritzventil (40) für das Einspritzen von Kraftstoff und Wasser in einen Maschinenzylinder, wobei das Kraftstoffeinspritzventil (40) einen Zusammenfluß bzw. Übergang (confluence) (31) aufweist, um den von einer Kraftstoffeinspritzpumpe (3) über einen ersten Kraftstoffdurchgang (8, 22) geförderten Kraftstoff und das aus einem Wasserbehälter (19) über einen Wasserförderdurchgang (15, 17, 21) mit einem durch ein Regelventil (16) gesteuerten Rückschlagventil (13) zugeführte Wasser sich darin miteinander vereinigen zu lassen,
gekennzeichnet durch einen zweiten Kraftstoffdurchgang (117) zum Verbinden eines Kraftstoffbehälters (1) mit dem Wasserförderdurchgang (15, 17, 21) und
ein an einem Zusammenfluß oder Übergang zwischen dem Wasserförderdurchgang (15, 17, 21) und dem zweiten Kraftstoffdurchgang (117) angeordnetes Umschaltventil (201) zum abwechselnden Zuspeisen des Kraftstoffs und des Wassers zum Kraftstoffeinspritzventil (40) über den Wasserförderdurchgang (15, 21).

2. Dieselmaschine mit Wassereinspritzung, umfassend ein gemeinsames Kraftstoffeinspritzventil (40) zum Einspritzen von Kraftstoff und Wasser in einen Maschinenzylinder, mit einem einen Wasserbehälter (19) und einen Wasserdurchgang (30) im Kraftstoffeinspritzventil (40) verbindenden Wasserförderdurchgang (15, 17, 21), wobei der Wasserdurchgang (30) ein Rückschlagventil (13) aufweist, einen ersten Kraftstoffdurchgang (8) zum Verbinden einer Kraftstoffpumpe (3) mit einem ersten Kraftstoffdurchgang (22) im Kraftstoffeinspritzventil (40), ein Regelventil (16) zum Öffnen und Schließen des Wasserförderdurchgangs (15, 17, 21) und einen im Kraftstoffeinspritzventil (40) angeordneten ersten Zusammenfluß- oder Übergangsdurchgang (31) zum Verbinden des ersten Kraftstoffdurchgangs (22) mit dem Wasserdurchgang (30),
gekennzeichnet durch einen zweiten Kraftstofförderdurchgang (115, 177) zum Verbinden eines Kraftstoffbehälters (1) mit einem zweiten Kraftstoffdurchgang (130) im Kraftstoffeinspritzventil (40),
ein Regelventil (116) zum Öffnen und Schließen des zweiten Kraftstofförderdurchgangs (115, 177) und einen im Kraftstoffeinspritzventil (40) vorgesehenen zweiten Zusammenfluß oder Übergang (131) zum Verbinden des ersten Kraftstoffdurchgangs (22) mit dem zweiten Kraftstoffdurchgang (130) mit einem Rückschlagventil (113),
wobei der zweite Zusammenfluß oder Übergang (131) näher als der erste Zusammenfluß oder Übergang (31) an einer Einspritzöffnung (10) angeordnet ist.

## Revendications

1. Moteur Diesel à injection d'eau comportant une vanne partagée d'injection de carburants (40) pour injecter du carburant et de l'eau à l'intérieur d'un cylindre moteur, ladite vanne d'injection de carburant (44) comportant une zone de confluence (31) pour permettre au carburant acheminé depuis une pompe d'injection de carburant (3) via un premier passage de carburant (8, 22) et à l'eau acheminée depuis un réservoir d'eau (19) via un passage d'alimentation d'eau (4, 17, 21) comportant un clapet anti-retour (13) commandé par une vanne de commande (16), d'être réunis dans celle-ci,
caractérisé en ce qu'un second passage de carburant (117) relie un réservoir de carburant (1) et le passage d'alimentation d'eau (15, 17, 21), et
une vanne de commutation (201) est agencée au niveau d'une zone de confluence entre ledit passage d'alimentation d'eau (15, 17, 21) et ledit second passage de carburant (117) pour acheminer de manière alternée le carburant et l'eau vers ladite vanne d'injection de carburant (40) via ledit passage d'alimentation d'eau (15, 21).

2. Moteur Diesel à injection d'eau comportant une vanne partagée d'injection de carburant (40) pour injecter du carburant et de l'eau à l'intérieur d'un cylindre moteur, comportant un passage d'alimentation d'eau (15, 17, 21) reliant un réservoir d'eau (19) et un passage d'eau (30) situé dans ladite vanne d'injection de carburant (40), ledit passage d'eau (30) comportant un clapet anti-retour (13), un premier passage d'acheminement de carburant (8) reliant une pompe de carburant (3) et un premier passage de carburant (22) situé dans ladite vanne d'injection de carburant (40), une vanne de commande (16) pour ouvrir et fermer ledit passage d'alimentation d'eau (15, 17, 21), et une première partie de confluence (31) agencée dans ladite vanne d'injection de carburant (40) pour relier ledit premier passage de carburant (22) et le passage d'eau (30),
caractérisé en ce qu'il comporte un second passage d'acheminement de carburant (115, 117) reliant un réservoir de carburant (1) et un second passage de carburant (130) situé dans ladite vanne d'injection de carburant (40),
une vanne de commande (116) pour ouvrir et fermer le second passage d'acheminement de carburant (115, 117) et une seconde partie de confluence (131) située dans ladite vanne d'injection de carburant (40) pour relier ledit premier passage de carburant (22) et ledit second passage de carburant (130) ayant un clapet anti-retour (113),
ladite seconde partie de confluence (131) étant agencée plus près d'un orifice d'injection 10 que ladite première partie de confluence (31).
